# EUROPEAN PATENT APPLICATION

(11) **EP 4 672 077 A1**
(43) Date of publication of application: **31.12.2025**
(21) Application number: 25184684.6
(22) Date of filing: 23.06.2025
(51) Int. Cl.: G06F 40/174, G06F 40/216, G06F 40/35

(54) **INFORMATION PROCESSING APPARATUS AND PROGRAM**

(30) Priority: 26.06.2024 JP 2024103390
(71) Applicant: TOYOTA JIDOSHA KABUSHIKI KAISHA, Toyota-shi, Aichi-ken 471-8571 (JP)
(72) Inventor: TORII, Yuji, Nagoya-shi, Aichi-ken 451-6015 (JP); WADA, Soma, Nagoya-shi, Aichi-ken 451-6015 (JP)
(74) Representative: Cabinet Beau de Loménie

(57) **Abstract**

A controller (12) of an information processing apparatus (10) generates (S101) a message (41) to a user of a chatbot, automatically generates (S102) a plurality of next input candidates (43-1, 43-2, 43-3, 43-4) for the user in response to the message (41) according to content of a dialogue with the user, automatically determines (S103) whether a number of selections to be made by the user from among the input candidates (43-1, 43-2, 43-3, 43-4) is limited to one according to the content of the dialogue with the user, and generates (S104) display information indicating a display mode for the input candidates (43-1, 43-2, 43-3, 43-4) according to whether the number of selections is limited to one.

## Description

### TECHNICAL FIELD

The present disclosure relates to an information processing apparatus and a non-transitory computer readable medium.

### BACKGROUND

Recently, technology for automatically generating and presenting the next input candidates to the chatbot user has been developed. For example, see Patent Literature (PTL) 1.

### CITATION LIST

### Patent Literature

PTL 1: JP 6624539 B1

### SUMMARY

However, it is desirable to further reduce the burden of filling out forms in a chatbot-style user interface (UI).

It would be helpful to further reduce the burden of filling out forms in a chatbot-style UI.

The gist of the present disclosure to solve the above problem is as follows.
(1) An information processing apparatus including a controller and being configured to provide a chatbot service,
   wherein the controller is configured to:
   generate a message to a user of a chatbot;
   automatically generate a plurality of next input candidates for the user in response to the message according to content of a dialogue with the user;
   automatically determine whether a number of selections to be made by the user from among the input candidates is limited to one according to the content of the dialogue with the user; and
   generate display information indicating a display mode for the input candidates according to whether the number of selections is limited to one.
(2) The information processing apparatus according to (1), wherein the controller is configured to restrict a number of the input candidates upon determining that the number of selections is not limited to one.
(3) The information processing apparatus according to (1) or (2), wherein the display information does not include information explicitly indicating whether the number of selections is limited to one.
(4) A program for causing a computer to function as the information processing apparatus according to any of (1) to (3).

According to the present disclosure, the input burden of the user in a chatbot-style UI can be reduced.

### BRIEF DESCRIPTION OF THE DRAWINGS

In the accompanying drawings:
FIG. 1 is a diagram illustrating an example configuration of an information processing system according to an embodiment;
FIG. 2 is a flowchart illustrating an example processing procedure for an information processing apparatus according to an embodiment;
FIG. 3 is a diagram illustrating an example of a display screen of an information processing terminal according to an embodiment;
FIG. 4A is a diagram illustrating another example of the display screen of the information processing terminal according to an embodiment; and
FIG. 4B is a diagram illustrating another example of the display screen of the information processing terminal according to an embodiment.

### DETAILED DESCRIPTION

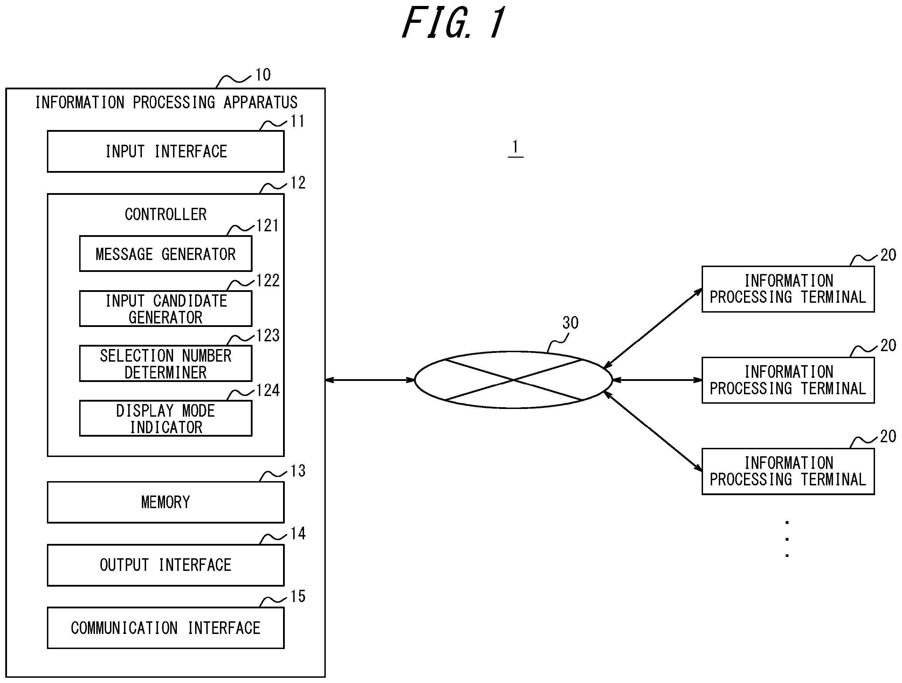

An information processing system 1 according to an embodiment illustrated in FIG. 1 includes an information processing apparatus 10 and a plurality of information processing terminals 20. The information processing apparatus 10 includes an input interface 11, a controller 12, a memory 13, an output interface 14, and a communication interface 15. The controller 12 is equipped with a message generator 121, an input candidate generator 122, a selection number determiner 123, and a display mode indicator 124.

The information processing apparatus 10 connects to a plurality of information processing terminals 20 via a communication network 30. The information processing apparatus 10 is, for example, a Web server. The communication network 30 may include a wireless network, an optical network, or a combination thereof. The information processing terminals 20 are PCs, mobile terminals (e.g., smartphones), or the like.

The input interface 11 is, for example, a physical key, a capacitive key, a pointing device, a touch screen integrally provided with a display, or the like. The input interface 11 accepts an operation for inputting data to be used for the operations of the information processing apparatus 10.

The controller 12 may be composed of dedicated hardware such as an ASIC, FPGA, etc., or it may be composed of one or more processors, or it may include both. The controller 12 executes processes related to the operations of the information processing apparatus 10 while controlling the components of the information processing apparatus 10.

The memory 13 includes one or more memories. The memories are, for example, semiconductor memories, magnetic memories, optical memories, or the like. The memory 13 functions as, for example, a main memory, an auxiliary memory, a cache memory, or the like.

The output interface 14 is, for example, an LCD, an organic EL display, or the like. The output interface 14 presents the data created by the controller 12 to the user. The input interface 11 and the output interface 14 may be connected to the information processing apparatus 10 as an external output device, instead of being included in the information processing apparatus 10. As an interface for connection, any interface compliant with a standard such as USB, HDMI^{®} (HDMI is a registered trademark in Japan, other countries, or both), or Bluetooth^{®} (Bluetooth is a registered trademark in Japan, other countries, or both) can be used.

The communication interface 15 includes at least one communication interface for communicating with the information processing terminals 20. The communication interface 15 receives data from the information processing terminals 20 and transmits data obtained by the operations of the information processing apparatus 10 to the information processing terminals 20.

Next, processing by the controller 12 is described below. The controller 12 may use a deep learning model such as a Large Language Model (LLM) as the generative AI.

The message generator 121 generates messages to users (those who use the chatbot service using the information processing terminals 20) by means of the generative AI. The information processing apparatus 10 transmits the messages generated by the message generator 121 to the information processing terminals 20 via the communication interface 15.

The input candidate generator 122 automatically generates a plurality of next input candidates for the user (answer choices) in response to the message generated by the message generator 121, according to the content of a dialogue with the user. The input candidate generator 122 generates input candidates according to the content of the dialogue with the user by means of the generative AI. The information processing apparatus 10 transmits the input candidates generated by the input candidate generator 122 to the information processing terminal 20 via the communication interface 15.

The selection number determiner 123 automatically determines whether the number of selections (number of responses) to be made by the user from among the input candidates generated by the input candidate generator 122 is limited to one according to the content of the dialogue with the user. The selection number determiner 123 determines whether the number of selections is limited to one by the generative AI.

The input candidate generator 122 may restrict the number of input candidates when the number of selections is determined by the selection number determiner 123 not to be limited to one. If the number of input candidates is too large, the user will have to answer multiple questions from a large number of choices, which will be a burden of the user and make the screen cumbersome. By restricting the number of input candidates to n or less (e.g. n = 5), the input burden of the user can be further reduced.

The display mode indicator 124 generates display information indicating a display mode for the input candidates according to the result of the determination by the selection number determiner 123 (i.e., whether the number of selections is limited to one). The information processing apparatus 10 transmits the display information generated by the display mode indicator 124 to the information processing terminal 20 via the communication interface 15.

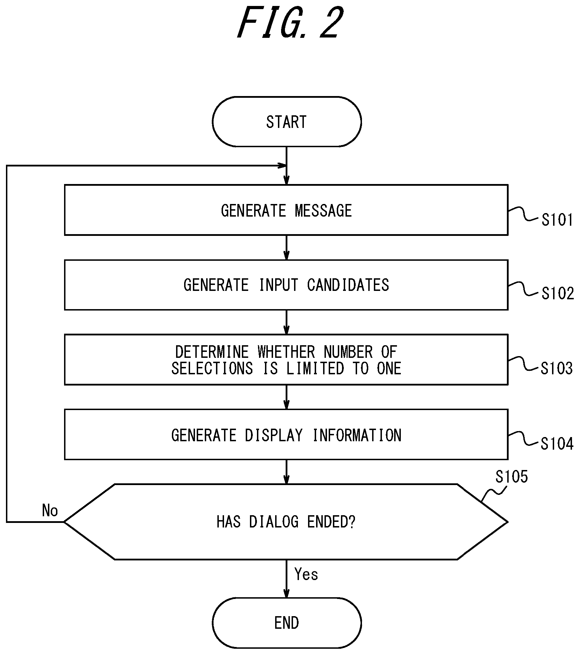

Next, the processing procedure for the information processing apparatus 10 is described with reference to FIG. 2.

In step S101, the message generator 121 automatically generates a message (question text) to the user. The message generator 121 may automatically generate a response summary sentence that summarizes the user's previous input (response). The communication interface 15 transmits messages such as question text and response summary text to the information processing terminal 20.

In step S102, the input candidate generator 122 automatically generates a plurality of next input candidates for the user according to the content of the message generated by the message generator 121. For example, if a first message "What do you often use the car for?" is generated in step S101, for example, a plurality of input candidates such as "Commuting", "Shopping", "Traveling", "Leisure", etc. is generated as the next input candidates for the user. For example, if a second message "Do you often have a lot of luggage?" is generated in step S101, "Yes" and "No" are generated as the next input candidates for the user. The communication interface 15 transmits the next input candidates for the user to the information processing terminal 20.

In step S103, the selection number determiner 123 automatically determines whether the number of selections to be made by the user (number of answer selections) from among the input candidates is limited to one (exclusive selection) or not limited to a one (any number of selections), according to the situation. For example, if the first message above is generated in step S101, it is determined that the number of selections to be made by the user is not limited to one because the first message asks for a use. For example, if the second message above is generated in step S101, it is determined that the number of selections to be made by the user is limited to one because the second message asks whether the answer is affirmative or negative.

In step S104, the display mode indicator 124 generates display information indicating the display mode for the input candidates according to whether the number of selections is limited to one. For example, if the display mode indicator 124 determines in step S103 that the number of selections is not limited to one, it generates display information indicating a check box notation, and if it determines in step S103 that the number of selections is limited to a single number, it generates display information indicating a radio button notation. The communication interface 15 transmits the display information to the information processing terminal 20.

In step S105, the controller 12 determines whether the dialogue with the user has ended, and if it determines that the dialogue with the user has not ended, the process returns to step S101.

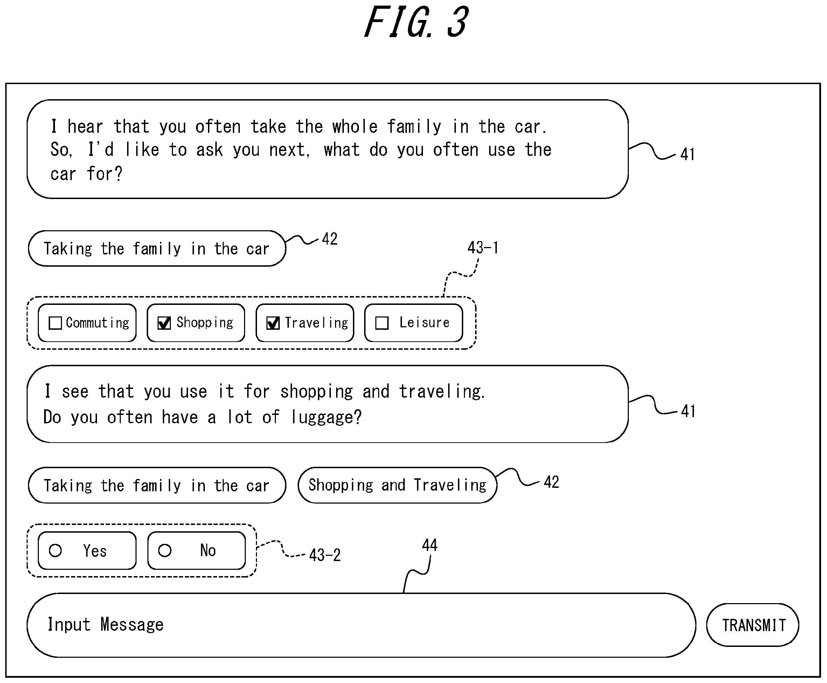

FIG. 3 is a diagram illustrating an example of a display screen of the information processing terminal 20. A message 41 indicates a question text (message from the chatbot) received from the information processing apparatus 10. A message 42 indicates the response summary text received from the information processing apparatus 10. The response summary statement is a summary of the user's response. Although the message 42 is not required, the message 42 allows the information processing apparatus 10 to present its understanding of the message to the user, and allows for a smoother exchange of messages between the information processing apparatus 10 and the user.

Input candidates 43-1 indicate input candidates when the number of selections to be selected by the user is not limited to one. Since the input candidates 43-1 represent check boxes, the user can determine that the number of selections is not limited to one. Input candidates 43-2 indicate input candidates when the number of selections to be selected by the user is limited to one. Since the input candidates 43-2 represent radio buttons, the user can determine that the number of selections is limited to one. Input candidates are presented each time according to the dialogue history.

A message input field 44 is for the user to enter any message. Although the message input field 44 is not required, the message input field 44 allows the user to transmit a response if he/she determines that a more suitable response exists than the input candidates provided.

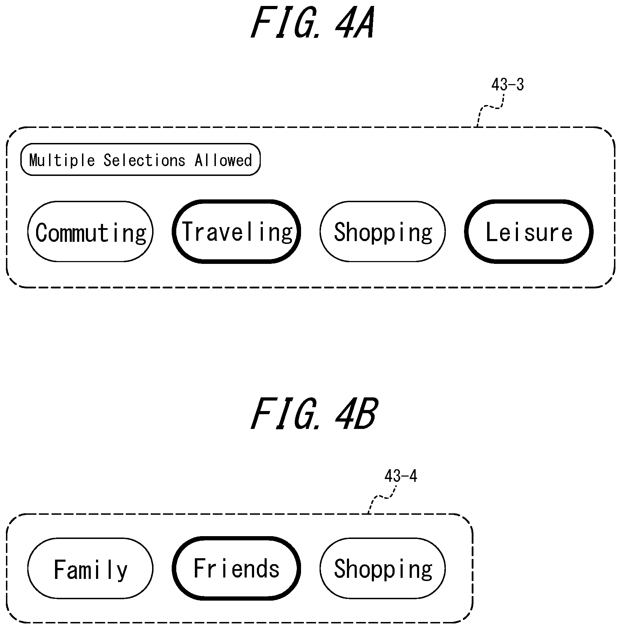

FIGS. 4A and 4B are diagrams each illustrating another example of the display screen of the information processing terminal 20. Input candidates for cases where the number of selections to be made by the user is not limited to one may be explicitly indicated as "Multiple Selections Allowed", as input candidates 43-3 in FIG. 4A. The example in FIG. 4A illustrates that "Traveling" and "Leisure" were selected. However, by changing the answer selected by the user from the default display to a highlighted display, the user can determine that the number of selections is not limited to one, even without explicitly stating "Multiple Selections Allowed", as input candidates 43-4 in FIG. 4B. The example in FIG. 4B illustrates that "Friends" was selected. When "Family" and "Shopping" are selected, these are also highlighted. Therefore, the display information generated by the display mode indicator 124 does not need to include information explicitly indicating whether the number of selections is limited to one. By omitting the "Single Selection" and "Multiple Selections Allowed", it is possible to simplify the screen display of the information processing terminal.

Thus, according to the present disclosure, it is not necessary to exhaustively predefine conversation and question patterns and to maintain tables, so that a variety of cases can be realized with a small amount of management man-hours. According to the present disclosure, instead of setting (maintaining a table of) multiple input candidates (answer choices) together with whether they are exclusive choices or not, the generative AI automatically generates input candidates, including whether the number of selections to be made by the user is limited to one, according to the conversation history, thus reducing the complexity of table setting during system design. According to the present disclosure, the user of the chatbot only needs to select from the input candidates when replying, and the user can further know whether the number of selections is limited to one (exclusive selection) by the display mode for the input candidates, thereby reducing the input burden of the user.

### <Program>

It is also possible to use a computer capable of executing program instructions to function as the information processing apparatus 10 described above. Here, a computer is, for example, a general purpose computer, dedicated computer, workstation, PC, etc. Program instructions may be program code, code segments, etc. to perform the required task.

The controller 12 is a processor such as CPU, MPU, GPU, DSP, SoC (System on a Chip), etc., and may be composed of multiple processors of the same or different types. The processor reads the program from the memory 13 and executes it to perform the process described above. At least some of these processing contents may be realized in hardware.

The program may be recorded on a computer readable recording medium. With such a recording medium, the program can be installed on a computer. Here, the recording medium on which the program is recorded may be a non-transitory recording medium. The non-transitory recording medium is not limited, but may be, for example, CD-ROM, DVD-ROM, USB memory, etc. The program may also be downloaded from an external device via a network.

Although the above embodiments are described as representative examples, it is clear to those skilled in the art that many changes and substitutions can be made within the intent and scope of this disclosure. For example, multiple component blocks described in the configuration diagram of the implementation can be integrated or one component block can be split. It is also possible to merge the multiple steps described in the flowchart of the implementation into one step or to split one step into separate steps.

## Claims

1. An information processing apparatus (10) comprising a controller (12) and being configured to provide a chatbot service,
wherein the controller (12) is configured to:
generate (S101) a message (41) to a user of a chatbot;
automatically generate (S102) a plurality of next input candidates (43-1, 43-2, 43-3, 43-4) for the user in response to the message (41) according to content of a dialogue with the user;
automatically determine (S103) whether a number of selections to be made by the user from among the input candidates (43-1, 43-2, 43-3, 43-4) is limited to one according to the content of the dialogue with the user; and
generate (S104) display information indicating a display mode for the input candidates according to whether the number of selections is limited to one.

2. The information processing apparatus (10) according to claim 1, wherein the controller (12) is configured to restrict a number of the input candidates (43-1, 43-2, 43-3, 43-4) upon determining that the number of selections is not limited to one.

3. The information processing apparatus (10) according to claim 1, wherein the display information does not include information explicitly indicating whether the number of selections is limited to one.

4. A program comprising instructions which, when the program is executed by a computer, cause the computer to:
generate (S101) a message (41) to a user of a chatbot;
automatically generate (S102) a plurality of next input candidates (43-1, 43-2, 43-3, 43-4) for the user in response to the message (41) according to content of a dialogue with the user;
automatically determine (S103) whether a number of selections to be made by the user from among the input candidates (43-1, 43-2, 43-3, 43-4) is limited to one according to the content of the dialogue with the user; and
generate (S104) display information indicating a display mode for the input candidates according to whether the number of selections is limited to one..
